# EUROPEAN PATENT APPLICATION

(11) **EP 4 432 515 A1**
(43) Date of publication of application: **18.09.2024**
(21) Application number: 21963966.3
(22) Date of filing: 09.11.2021
(51) Int. Cl.: H02J 9/08

(54) **POWER GENERATION SYSTEM, CONTROL DEVICE, CONTROL METHOD, AND PROGRAM**

(71) Applicant: JFE Engineering Corporation, Chiyoda-ku, Tokyo 100-0011 (JP)
(72) Inventor: INATSUKI, Masaya, Tokyo 100-0011 (JP); TOMINAGA, Junichi, Tokyo 100-0011 (JP); NISHIDA, Ikuro, Tokyo 100-0011 (JP); FURUSE, Hiroyuki, Tokyo 100-0011 (JP)
(74) Representative: Hoffmann Eitle
(86) International application number: PCT/JP2021/041189
(87) International publication number: WO 2023/084603

(57) **Abstract**

An object is to keep supplying power to load equipment without a stop even in a case where system power is in a power failure state. A power generation system includes: a generator that controls generated power by driving an internal combustion engine including a governor; a power load to which external power from an external commercial power system and the generated power of the generator can be supplied; a simulated load that consumes the generated power of the generator together with the power load; and a control unit capable of controlling power consumption of the simulated load, in which the control unit performs, as power increase/decrease control capable of changing the power consumption of the simulated load to an arbitrary power value in a state in which power generation driving of the generator is continuously performed, control of setting the power consumption of the simulated load to predetermined power consumption before acquiring a power failure signal indicating detection or prediction of a power failure of the commercial power system, and control of changing the power consumption of the simulated load from the predetermined power consumption to other power consumption in a case where the power failure signal is acquired.

## Description

### Field

The present invention relates to a power generation system, a control device, a control method, and a program.

### Background

There is a case where a facility provided with a power load such as an electric device includes a power generation system that generates power by being interconnected with a commercial power system and supplies the generated power to the power load. Patent Literature 1 discloses, as such a power generation system, a technique of starting an internal combustion engine that drives a generator and performing self-sustaining operation of the generator in a state in which the generator is disconnected from a commercial power system or a normal power supply at the time of a power failure in which power reception from the commercial power system or the normal power supply is stopped, and applying a part or all of a specific load of a power load, which is a target of power supply at the time of the power failure, to the generator at a stage at which a generated voltage of the generator is established and stable power generation can be performed.

In addition, Patent Literature 2 and 3 discloses a technique of providing a simulated load that consumes generated power of a generator separately from a power load, and increasing/decreasing power consumption of the simulated load on the basis of power consumption of the power load.

Incidentally, when the power consumption of the simulated load is increased or decreased on the basis of the power consumption of the power load, it takes time to respond to an increase or decrease in the power consumption of the simulated load with respect to a change in the power consumption of the power load. In this case, a phenomenon such as a fluctuation in excess or deficiency of the generated power of the generator is generated due to a delay in control which delay is caused by the time required for the response, and there is a possibility that the generated power does not become stable. It is known that this phenomenon remarkably appears in a case where the generator is operated in such a manner that an output of an internal combustion engine that is a drive source of the generator is made to be a rated output.

Thus, a technique described in Patent Literature 4 has been proposed. The technique described in Patent Literature 4 can stably execute, in a short time, establishment of a generated voltage of a generator and application of a power load, which are required after power reception from a commercial power system or a normal power supply is stopped, that is, after a power failure.

### Citation List

### Patent Literature

Patent Literature 1: Japanese Patent Application Laid-open No. 2007-6595
Patent Literature 2: Japanese Patent Application Laid-open No. 2015-109745
Patent Literature 3: Japanese Patent Application Laid-open No. 2015-109746
Patent Literature 4: Japanese Patent No. 6852828 Summary

### Technical Problem

However, according to the above-described conventional technologies, in a technique of stably operating power generation equipment that generates power by driving an internal combustion engine by utilizing a simulated load in a power failure state, when the power generation equipment is in a state of being cut off from system power due to a power failure or the like during operation in a normal manner, that is, during normal operation, it is necessary to shift to self-sustaining operation that utilizes only a self-auxiliary machine of the power generation facility, to enable the technique of stably operating the power generation facility that generates power by driving the internal combustion engine by utilizing the simulated load in the power failure state, and then to perform operation of raising the load by the simulated load. In this case, there is a problem that supply of power to the power load is stopped for a certain period from a time point of the shift to the self-sustaining operation, in which only the self-auxiliary machine of the power generation equipment is utilized, until the load raising operation by the simulated load is completed.

The present invention has been made in view of the above, and an object of thereof is to provide a power generation system, a control device, a control method, and a program capable of keeping supplying power to a power load without a stop even in a case where system power is in a power failure state.

### Solution to Problem

To solve the problem and achieve the object, a power generation system according to the present invention includes: a generator that controls generated power by driving an internal combustion engine including a governor; a power load to which external power from an external commercial power system and the generated power of the generator can be supplied; a simulated load that consumes the generated power of the generator together with the power load; and a control unit capable of controlling power consumption of the simulated load, wherein the control unit performs, as power increase/decrease control capable of changing the power consumption of the simulated load to an arbitrary power value in a state in which power generation driving of the generator is continuously performed, control of setting the power consumption of the simulated load to predetermined power consumption before acquiring a power failure signal indicating detection or prediction of a power failure of the commercial power system, and control of changing the power consumption of the simulated load from the predetermined power consumption to other power consumption in a case where the power failure signal is acquired.

Moreover, in the power generation system according to the present invention, the control unit may switch the power load to at least one of an important general load or a disaster prevention load set in advance in a case where the power failure signal is acquired.

Moreover, in the power generation system according to the present invention, the control unit may control the power consumption of the simulated load in such a manner as to cause the simulated load to consume power corresponding to a difference between the power consumption of the power load and the generated power of the generator in a case where the power failure signal is acquired.

Moreover, in the power generation system according to the present invention, the predetermined power consumption of the simulated load may be equal to or higher than 0 kW and lower than a rated output of the generator.

Moreover, a control device according to the present invention includes: a control unit capable of controlling, in a case of supplying generated power of a generator controlled by driving of an internal combustion engine including a governor to a power load to which external power from an external commercial power system and the generated power of the generator can be supplied, power consumption of a simulated load which is different from the power load, power consumption of which can be changed, and which consumes the generated power of the generator together with the power load, wherein the control unit performs, as power increase/decrease control capable of changing the power consumption of the simulated load to an arbitrary power value in a state in which power generation driving of the generator is continuously performed, control of setting the power consumption of the simulated load to predetermined power consumption before acquiring a power failure signal indicating detection or prediction of a power failure of the commercial power system, and control of changing the power consumption of the simulated load from the predetermined power consumption to other power consumption in a case where the power failure signal is acquired.

Moreover, a control method according to the present invention is the method executed by a control unit capable of controlling, in a case of supplying generated power of a generator controlled by driving of an internal combustion engine including a governor to a power load to which external power from an external commercial power system and the generated power of the generator can be supplied, power consumption of a simulated load which is different from the power load, power consumption of which can be changed, and which consumes the generated power of the generator together with the power load, the control method including: performing, as power increase/decrease control capable of changing the power consumption of the simulated load to an arbitrary power value in a state in which power generation driving of the generator is continuously performed, control of setting the power consumption of the simulated load to predetermined power consumption before acquiring a power failure signal indicating detection or prediction of a power failure of the commercial power system, and control of changing the power consumption of the simulated load from the predetermined power consumption to other power consumption in a case where the power failure signal is acquired.

Moreover, a program according to the present invention is the program causing a control unit capable of controlling, in a case of supplying generated power of a generator controlled by driving of an internal combustion engine including a governor to a power load to which external power from an external commercial power system and the generated power of the generator can be supplied, power consumption of a simulated load which is different from the power load, power consumption of which can be changed, and which consumes the generated power of the generator together with the power load, to execute, as power increase/decrease control capable of changing the power consumption of the simulated load to an arbitrary power value in a state in which power generation driving of the generator is continuously performed, control of setting the power consumption of the simulated load to predetermined power consumption before acquiring a power failure signal indicating detection or prediction of a power failure of the commercial power system, and control of changing the power consumption of the simulated load from the predetermined power consumption to other power consumption in a case where the power failure signal is acquired. Advantageous Effects of Invention

According to the present invention, even in a case where system power is in a power failure state, it is possible to keep supplying power to a power load without a stop.

### Brief Description of Drawings

FIG. 1 is a block diagram illustrating a power generation system according to one embodiment of the present invention.
FIG. 2 is a block diagram illustrating a control device of the power generation system according to the one embodiment of the present invention.
FIG. 3 is a flowchart for describing a control method by the control device of the power generation system according to the one embodiment of the present invention.
FIG. 4 is a graph illustrating an example of control by a conventional control device, the graph being for describing a problem of a conventional technology.
FIG. 5 is a graph illustrating an example of control by the control device of the power generation system according to the one embodiment of the present invention.
FIG. 6 is a graph illustrating another example of control by the control device of the power generation system according to the one embodiment of the present invention.

### Description of Embodiments

Hereinafter, one embodiment of the present invention will be described with reference to the drawings. Note that in all the drawings of the following one embodiment, the same or corresponding parts are denoted by the same reference sign. In addition, the present invention is not limited by the one embodiment described below.

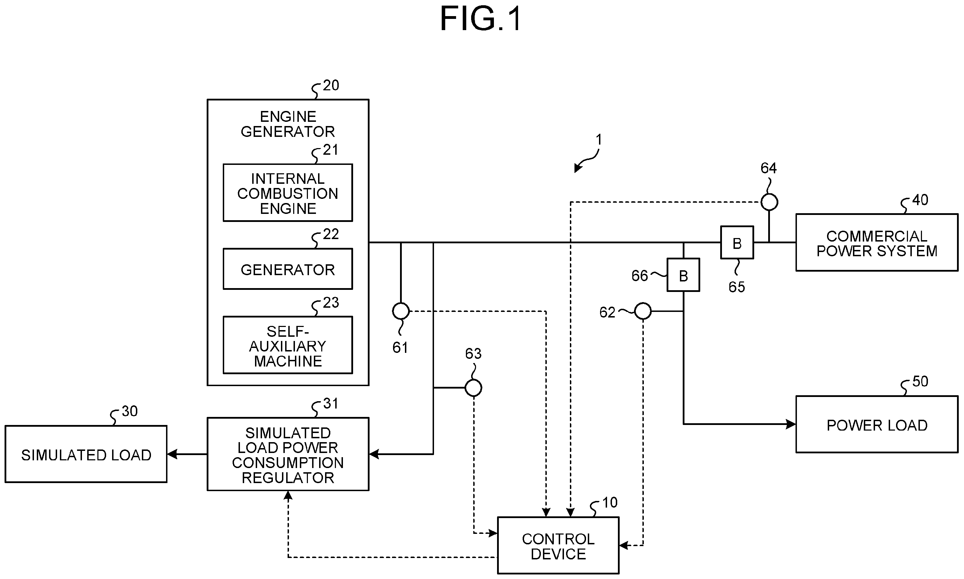

First, a power generation system according to the one embodiment of the present invention will be described. Although the one embodiment described below relates to a power generation system including an engine generator, a simulated load, and a control unit, another power generation system may be employed. An engine generator 20 generates power by driving an internal combustion engine provided with a governor (not illustrated). The engine generator is controlled by a predetermined engine control unit in such a manner that an output becomes a rated output at the time of power generation in which generated power is supplied to a power load. The power generation system according to the one embodiment of the present invention is a system in which a control device increases or decreases power consumption of a simulated load in such a manner that a change in generated power of the engine generator is reduced. FIG. 1 is a block diagram illustrating a configuration of the power generation system according to the present embodiment.

As illustrated in FIG. 1, a power generation system 1 according to the one embodiment includes a control device 10, an engine generator 20, a simulated load 30 regulated by a simulated load power consumption regulator 31, a commercial power system 40, and a power load 50.

In the power generation system 1, a generated power measurement unit 61 capable of measuring output power is provided on an output side of the engine generator 20. A power load power consumption measurement unit 62 capable of measuring supplied power is provided on an input side of the power load 50. A simulated load power consumption measurement unit 63 capable of measuring supplied power is provided on an input side of the simulated load power consumption regulator 31. Note that the simulated load power consumption measurement unit 63 may be provided on an input side of the simulated load 30. On an output side of the commercial power system 40, a power failure detection unit 64 that detects a stop of power supply from the commercial power system 40, that is, a power failure is provided.

A cutoff unit 65 for cutting off supply of power from the commercial power system 40 to the power load 50 is provided in a subsequent stage of the power failure detection unit 64. Note that the cutoff unit 65 may be provided in a preceding stage of the power failure detection unit 64. A cutoff unit 66 for cutting off supply of power from the commercial power system 40 or the engine generator 20 to the power load 50 is provided in a preceding stage of the power load power consumption measurement unit 62. Note that the cutoff unit 66 may be provided in a subsequent stage of the power load power consumption measurement unit 62.

The engine generator 20 as a generator includes an internal combustion engine 21, a generator 22, and a self-auxiliary machine 23. The engine generator 20 is configured to be able to generate power by generating a rotational motion by an engine as an internal combustion engine using fuel, and rotating a rotor of the generator. Note that the internal combustion engine 21 is not limited to an internal combustion engine such as an engine as long as being a mechanism capable of generating power by the generator 22.

The simulated load 30 includes, for example, a load resistor or the like that consumes predetermined power. The simulated load 30 is a load for controlling and stabilizing a fluctuation of the generated power of the engine generator 20 by consuming at least a part of the generated power of the engine generator 20, and is provided independently of the power load 50. Note that the simulated load 30 is common to the power load 50 in a point of being a load that consumes the generated power of the engine generator 20. The simulated load 30 is configured in such a manner that magnitude of the load can be regulated by the simulated load power consumption regulator 31. The simulated load power consumption regulator 31 is a device that regulates the power consumed by the simulated load on the basis of a regulation signal input from the control device 10. The regulation signal includes information for controlling an increase and decrease in the power consumption of the simulated load 30.

The commercial power system 40 is, for example, a power system from a power company or the like. Note that the commercial power system 40 includes a normal power supply and the like in the present specification. The power load 50 is a load to which power necessary for operating equipment is supplied, and is specifically a load such as a pump or a motor, for example. Note that the power load 50 is not limited to, for example, a pump or a motor, and various conventionally known loads are used.

The generated power measurement unit 61 is a wattmeter that is connected to a power supply line connected to the engine generator 20 and that outputs a measurement value of the generated power output from the engine generator 20 to the control device 10. The power load power consumption measurement unit 62 is a wattmeter that is connected to a power supply line connected to the power load 50 and that outputs a measurement value of the power consumption consumed by the power load 50 to the control device 10. The simulated load power consumption measurement unit 63 is a wattmeter that is connected to a power supply line connected to the simulated load 30 or the simulated load power consumption regulator 31 and that outputs a measurement value of the power consumption consumed by the simulated load 30 to the control device 10. Note that the generated power measurement unit 61, the power load power consumption measurement unit 62, and the simulated load power consumption measurement unit 63 are not limited to the wattmeters as long as being measurement instruments capable of evaluating an increase and decrease in power. For example, various measuring instruments such as an ammeter can be employed. In addition, the power failure detection unit 64 includes a detector that is connected to a power supply line connected to the commercial power system 40 and that is capable of detecting a state in which a stop of the system power from the commercial power system 40 or a power failure is predicted.

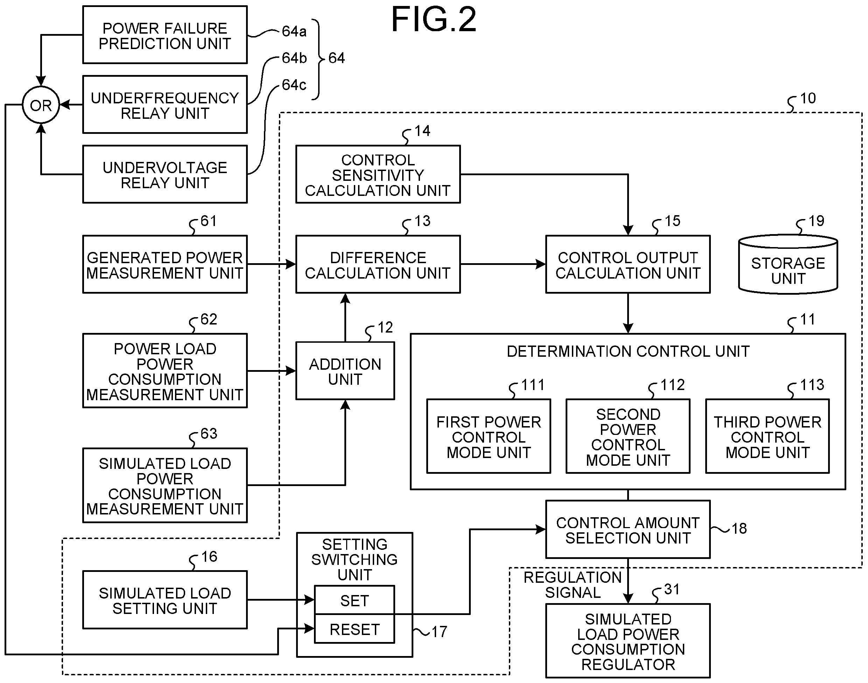

The control device 10 is configured to be able to acquire measurement values of the generated power of the engine generator 20, the power consumption of the power load 50, and the power consumption of the simulated load 30, and to control the increase and decrease of the power consumption of the simulated load 30 with the simulated load power consumption regulator 31. Furthermore, the control device 10 acquires a detection signal of a power failure state of the commercial power system 40 and controls the simulated load power consumption regulator 31. FIG. 2 is a block diagram illustrating the control device 10 of the power generation system 1 according to the present embodiment.

As illustrated in FIG. 2, the control device 10 includes a determination control unit 11, an addition unit 12, a difference calculation unit 13, a control sensitivity calculation unit 14, a control output calculation unit 15, a simulated load setting unit 16, a setting switching unit 17, a control amount selection unit 18, and a storage unit 19. To the control device 10, measurement values and signals are input from each of the generated power measurement unit 61, the power load power consumption measurement unit 62, the simulated load power consumption measurement unit 63, and the power failure detection unit 64. The power failure detection unit 64 includes at least one of a power failure prediction unit 64a, an underfrequency relay unit 64b, or an undervoltage relay unit 64c. Note that although being described to include the power failure prediction unit 64a, the underfrequency relay unit 64b, and the undervoltage relay unit 64c in FIG. 2, the power failure detection unit 64 is not limited to have a configuration in which all of the above are provided. The control device 10 outputs a control signal to the simulated load power consumption regulator 31.

Specifically, the control device 10 includes a processor including hardware, such as a central processing unit (CPU), a digital signal processor (DSP), and a field-programmable gate array (FPGA), and a main storage unit such as a random access memory (RAM) or a read only memory (ROM) (none is illustrated).

The storage unit 19 includes a storage medium selected from a volatile memory such as a RAM, a nonvolatile memory such as a ROM, an erasable programmable ROM (EPROM), a hard disk drive (HDD), a removable medium, and the like. Note that the removable medium is, for example, a universal serial bus (USB) memory, or a disc recording medium such as a compact disc (CD), a digital versatile disc (DVD), or a Blu-ray (registered trademark) disc (BD). Furthermore, the storage unit 19 may include a computer-readable recording medium such as a memory card that can be attached from the outside.

The storage unit 19 can store an operating system (OS), various programs, various tables, various databases, and the like for executing operation of the control device 10. Here, the various programs also include a power increase/decrease control program that realizes the increase/decrease control of the power consumption of the simulated load 30 according to the present embodiment. These various programs can be widely distributed by being recorded in a computer-readable recording medium such as a hard disk, a flash memory, a CD-ROM, a DVD-ROM, or a flexible disk.

In the control device 10, each of the programs stored in the storage unit 19 is loaded into a work area of the main storage unit and executed, and each component or the like is controlled through the execution of the program, whereby a function that coincides with a predetermined purpose can be realized. In the present embodiment, processing of the determination control unit 11, the addition unit 12, the difference calculation unit 13, the control sensitivity calculation unit 14, the control output calculation unit 15, the simulated load setting unit 16, the setting switching unit 17, and the control amount selection unit 18 is executed by execution of the programs by the control device 10.

The determination control unit 11 determines and selects a control mode on the basis of the measurement value of the generated power which value is acquired from the generated power measurement unit 61 and the measurement value of the power consumption which value is acquired from at least one of the power load power consumption measurement unit 62 or the simulated load power consumption measurement unit 63. On the basis of the selected control mode, the determination control unit 11 outputs a control signal (regulation signal) to the simulated load power consumption regulator 31 and performs control.

The determination control unit 11 in the power generation system 1 according to the present embodiment includes, for example, the following three power control mode units. The determination control unit 11 of the control device 10 included in the power generation system 1 according to the present embodiment functions as a main control unit that executes the following power control modes. Specifically, first, the determination control unit 11 selects one control mode unit from a first power control mode unit 111, a second power control mode unit 112, and a third power control mode unit 113, for example. Subsequently, the determination control unit 11 controls the power consumption of the simulated load 30 by controlling the simulated load power consumption regulator 31 on the basis of the power control mode executed by the selected power control mode unit. Here, details of each power control mode executed by each of the first power control mode unit 111, the second power control mode unit 112, and the third power control mode unit 113 will be described.

The first power control mode executed when the determination control unit 11 selects the first power control mode unit 111 is a power control mode in which reduction of the emitted power is started. That is, at the time of the power failure of the commercial power system 40, the load power of the power load 50 may transiently increase from, for example, a starting time point of the application. In this case, the first power control mode unit 111 of the determination control unit 11 controls the simulated load power consumption regulator 31 and changes the power consumption (emitted power) of the simulated load 30 in such a manner as to decrease for an amount of the increase in the load power of the power load 50. As a result, the emitted power is reduced in accordance with the load power consumed by the power load 50, and the generated power of the engine generator 20 can be kept substantially constant.

The second power control mode executed when the determination control unit 11 selects the second power control mode unit 112 is a power control mode in which the decrease or increase in the emitted power of the simulated load 30 is stopped for a predetermined time or the load of the simulated load 30 is kept constant for a predetermined time. That is, the second power control mode unit 112 controls the simulated load power consumption regulator 31 and keeps the emitted power of the simulated load 30 in a state of not being decreased or of being constant.

The third power control mode executed when the determination control unit 11 selects the third power control mode unit 113 is a power control mode of increasing the emitted power of the simulated load 30. That is, the third power control mode unit 113 controls the simulated load power consumption regulator 31 and increases the emitted power of the simulated load 30. At the time of the power failure of the commercial power system 40, there is a case where the load power in the power load 50 continuously and asymptotically decreases. Thus, the third power control mode unit 113 controls the simulated load power consumption regulator 31 and increases the emitted power in the simulated load 30 at an increase rate larger than an absolute value of an increase rate, that is, a decrease rate of the load power consumed by the power load 50. In other words, an increase rate of the emitted power of the simulated load 30 is made larger than the decrease rate of the load power of the power load 50, whereby the generated power decreased following the decrease in the load power of the power load 50 is regulated. As a result, the generated power of the engine generator 20 can be kept substantially constant.

Control of keeping the substantially constant generated power of the engine generator 20 by performing switching among the first power control mode, the second power control mode, and the third power control mode is referred to as power increase/decrease control on the engine generator 20.

The addition unit 12 acquires and adds the measurement value of the power load power consumption measurement unit 62 and the measurement value of the simulated load power consumption measurement unit 63, and performs an output thereof to the difference calculation unit 13. That is, the addition unit 12 outputs the total power consumption of the power consumption of the simulated load 30 and the power consumption of the power load 50 to the difference calculation unit 13.

The difference calculation unit 13 calculates a difference between the total power consumption of the simulated load 30 and the power load 50 and the generated power of the engine generator 20, and outputs the difference to the control output calculation unit 15. In other words, the difference calculation unit 13 is a calculation unit that calculates a difference in power consumption with respect to the generated power. Since the difference calculation unit 13 calculates the difference between the generated power and the power consumption, it is possible to calculate a control value of the power consumption for the simulated load 30 which control value is necessary for making the generated power by the engine generator 20 substantially constant.

The control sensitivity calculation unit 14 calculates sensitivity with which the control value of the power consumption of the simulated load 30 which control value is necessary for making the generated power substantially constant and is calculated by the difference calculation unit 13 is output to the simulated load power consumption regulator 31. That is, the control sensitivity calculation unit 14 calculates a degree of sensitivity with which the control value of the power consumption of the simulated load 30 is output. The control sensitivity calculation unit 14 outputs information of the sensitivity acquired by the calculation to the control output calculation unit 15.

The control output calculation unit 15 generates control information including the control value of the power consumption of the simulated load 30 which control value is necessary for making the generated power substantially constant and is acquired by the difference calculation unit 13, and the information of the sensitivity acquired by the control sensitivity calculation unit 14. Note that the sensitivity acquired by the control sensitivity calculation unit 14 indicates a degree of sensitivity of an output of the control value of the power consumption of the simulated load 30, that is, a value corresponding to the difference between the power consumption of the simulated load and the load power, in other words, a rate A of the output of the value corresponding to the difference. In a case where the rate A corresponding to the sensitivity is larger than 1 (A > 1), there is a possibility that hunting or the like is generated due to rapid fluctuation while control can be executed quickly. On the other hand, in a case where the rate A corresponding to the sensitivity is equal to or smaller than 1 (A ≤ 1), there is a possibility that overload operation and low-load operation are prolonged since time is required while it is possible to stably perform control. The control output calculation unit 15 outputs the generated control information to the determination control unit 11. The determination control unit 11 converts the control information that is to be output to the simulated load power consumption regulator 31 and that is acquired in the control output calculation unit 15 into an appropriate control signal (regulation signal) and outputs the control signal to the simulated load power consumption regulator 31.

The simulated load setting unit 16 sets power consumption X (kW) consumed by the simulated load 30 during the normal operation of the power generation system 1, that is, during the normal operation in which the power supply from the commercial power system 40 is stable and the engine generator 20 outputs substantially constant power generation. Note that the power consumption X set by the simulated load setting unit 16 is set to a predetermined value equal to or larger than 0 (kW) and less than power V_{rated} corresponding to the rated output of the engine generator 20 (V_{rated} > X ≥ 0 kW). The set power consumption X of the simulated load 30 is output to the control amount selection unit 18 via the setting switching unit 17.

Here, the power consumption X of the simulated load 30 which power consumption is set in the simulated load setting unit 16 may be set by an operator who manages the power generation system 1 or may be set on the basis of the control information acquired by the calculation by the control output calculation unit 15. In addition, the power consumption X set by the simulated load setting unit 16 may be a fixed value that does not change during the normal operation, or may be a variable value that changes periodically, sequentially, or continuously.

The power failure prediction unit 64a in the power failure detection unit 64 is configured to be able to determine whether a parameter used to predict the power failure in the power supplied from the commercial power system 40 exceeds a predetermined threshold. The underfrequency relay unit 64b and the undervoltage relay unit 64c respectively include relays that emits signals in a case where frequency and voltage are insufficient, detect the insufficiency of the frequency and the voltage, and output a power failure signal. The power failure prediction unit 64a, the underfrequency relay unit 64b, and the undervoltage relay unit 64c output the power failure signal in a case of predicting the power failure of the commercial power system 40 or detecting the power failure. The output power failure signal is output to the setting switching unit 17.

The setting switching unit 17 is configured in such a manner that a set state in which the power consumption X set by the simulated load setting unit 16 is output to the determination control unit 11 and a reset state in which the output from the simulated load setting unit 16 to the determination control unit 11 is cut off can be switched. Here, the switching from the set state to the reset state is executed in a case where the power failure signal is input from at least one of the power failure prediction unit 64a, the underfrequency relay unit 64b, or the undervoltage relay unit 64c in the power failure detection unit 64.

The control amount selection unit 18 outputs the regulation signal based on the power consumption X set by the simulated load setting unit 16 to the simulated load power consumption regulator 31 continuously during a period in which the setting switching unit 17 is in the set state. That is, in a case where the setting switching unit 17 is in the set state, the control amount selection unit 18 overwrites (overrides) the control amount output from the determination control unit 11 with the set value set by the simulated load setting unit 16, and performs an output thereof to the simulated load power consumption regulator 31. On the other hand, in a case where the setting switching unit 17 is in the reset state, the control amount selection unit 18 outputs, to the simulated load power consumption regulator 31, the regulation signal based on the power consumption X according to the control amount output from the determination control unit 11.

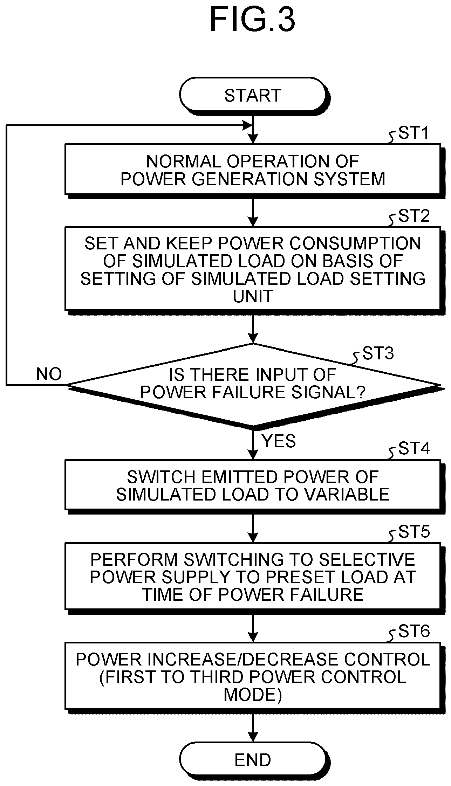

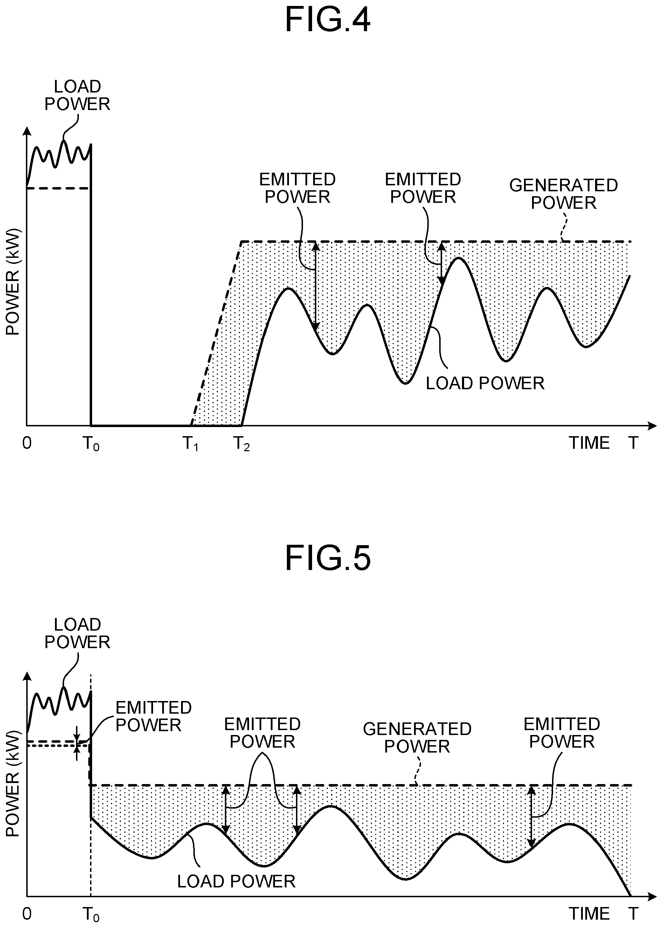

Next, a control method executed by the control device 10 configured as described above before and after a stop of power reception from the commercial power system 40, that is, the power failure will be described. FIG. 3 is a flowchart for describing the control method by the control device 10 according to the present embodiment. FIG. 4 and FIG. 5 are graphs illustrating examples of control by control devices 10 according to a conventional technology and the present embodiment, respectively.

First, in the conventional technology, as illustrated in FIG. 4, during normal operation of an engine generator 20, load power is typically in a state of being equal to or more than generated power of the engine generator 20, and the engine generator 20 is driven to output substantially constant generated power. That is, a part of the load power is supplemented by the generated power of the engine generator 20, and power is supplied from the commercial power system 40 for an insufficient amount of the load power (load power - generated power). In this state, in a case where a power failure is generated in the commercial power system 40 at a certain time point (power failure generation time point T₀), the commercial power system 40 is cut off from a power load 50 by a cutoff unit 65 (see FIG. 1), and the engine generator 20 is in a state of being parallel off from the power load 50. In this case, the engine generator 20 performs a shift to supply power to a self-auxiliary machine 23, and the generated power supplied to the power load 50 becomes 0. Then, when load raising operation of the engine generator 20 is started by the control according to the above-described conventional technology by a predetermined engine control unit (not illustrated) (start-up starting time point T₁), emission of power is started, an output of the engine generator 20 increases, and substantially constant operation of a specified output is reached. After reaching the substantially constant operation of the specified output, the power load 50 is applied (load application time point T₂). In other words, when start-up time elapses from the start-up starting time point T₁ of the engine generator 20, the engine generator 20 is settled and the generated power is stabilized, and at least a part of the generated power of the engine generator 20 can be applied to the power load 50 as load power.

However, in this case, there is a period which is necessary until activation of the control according to the conventional technology is completed between the power failure generation time point T₀ of the commercial power system 40 and the start-up starting time point T₁ of the load raising operation in the engine generator 20 and during which the power is not supplied to the power load 50, that is, a non-power supply time (T₀ - T₁). Furthermore, a start-up time (T₂ - T₁) until the engine generator 20 reaches the substantially constant operation at the specified output from no-load operation and the power load 50 required at the time of the power failure can be applied is also required. Thus, the present inventor has devised a method of shortening the non-power supply time (T₀ - T₁) and the start-up time (T₂ - T₁), specifically, to 0. The control method described below is a control method capable of continuously supplying the generated power to the power load 50 required at the time of the power failure without stopping the internal combustion engine 21 and the generator 22 of the engine generator 20 even in a case where the power failure is generated and the power supply from the commercial power system 40 is stopped.

As illustrated in FIG. 3, first, in Step ST1, the engine generator 20 performs the normal operation in a state in which the power generation system 1 performs the normal operation. The normal operation is a state in which a part of the load power consumed in the power load 50 is supplemented by the generated power of the engine generator 20 and power is supplied from the commercial power system 40 to the power load 50 for an insufficient amount of the load power (load power - generated power).

During the normal operation of the engine generator 20 in Step ST1, proceeding to Step ST2 is performed. In Step ST2, the simulated load setting unit 16 of the control device 10 sets or keeps the power consumption X of the simulated load 30 and performs an output thereof to the control amount selection unit 18 via the setting switching unit 17. The control amount selection unit 18 outputs the regulation signal to the simulated load power consumption regulator 31 on the basis of the input set value of the power consumption X. As illustrated in FIG. 5, the simulated load power consumption regulator 31 to which the regulation signal is input regulates the simulated load 30 in such a manner that the input power consumption of the simulated load 30 becomes the predetermined power consumption X set by the simulated load setting unit 16. Note that while the setting switching unit 17 is in the set state, the power consumption X set by the simulated load setting unit 16 is kept as the power consumption X consumed in the simulated load 30. Here, the power consumption X consumed by the simulated load 30 can be arbitrarily set to 0 kW or more, and is preferably set to 0 kW.

Then, proceeding to Step ST3 illustrated in FIG. 3 is performed, and the setting switching unit 17 of the control device 10 determines whether the power failure signal is input from at least one of the power failure prediction unit 64a, the underfrequency relay unit 64b, or the undervoltage relay unit 64c in the power failure detection unit 64, that is, whether the power failure signal is input from the power failure detection unit 64. In a case where the setting switching unit 17 determines in Step ST3 that the power failure signal is not input (Step ST3: No), returning to Step ST1 is performed and the normal operation of the power generation system 1 is continued. On the other hand, in a case where the setting switching unit 17 determines in Step ST3 that the power failure signal is input (Step ST3: Yes), proceeding to Step ST4 is performed.

In Step ST4, the setting switching unit 17 is switched from the set state to the reset state. As a result, the emitted power consumed by the simulated load 30 is switched from the power consumption X set by the simulated load setting unit 16 to a variable changed by the determination control unit 11.

In addition, in Step ST5, by a conventionally known method, the power load 50 is continuously switched from the load consuming the power during the normal operation of the power generation system 1 to the load preset for the time of the power failure and set to operate at the time of the power failure. That is, the power load 50 is switched from a normal load to, for example, selective power supply to at least one of an important general load or a disaster prevention load. When the power load 50 is switched to the preset load at the time of the power failure, magnitude relation between the generated power by the engine generator 20 and the load power of the power load 50 is reversed (generated power ≥ load power). That is, unless a reverse power flow to the commercial power system 40 is performed, the engine generator is operated as peak shaving or base load operation for the purpose of reducing contract power. Thus, during the normal operation, the rated output of the engine generator 20 is smaller than load capacity. On the other hand, at the time of the power failure, since it is necessary to maintain equipment provided in the facility by the engine generator 20, equipment that consumes power is selected by a predetermined control unit. In this case, there is a high possibility that the power load 50 becomes equal to or less than the generated power of the engine generator 20 at the time of the power failure. Note that Step ST4 and ST5 can be executed in reverse order or simultaneously.

When a shift to control in which the emitted power consumed by the simulated load 30 is changed by the determination control unit 11 is performed in Step ST4, and the power load 50 is switched to the preset load at the time of the power failure in Step ST5, proceeding to Step ST6 is performed, and the control on the simulated load 30 becomes power increase/decrease control. That is, along with the power failure of the commercial power system 40, the power load 50 is switched to the preset load at the time of the power failure, and the shift to the power increase/decrease control in which the emitted power consumed by the simulated load 30 is changed according to the fluctuation of the power load 50 is performed. In other words, the emitted power consumed by the simulated load 30 increases from the set power consumption X, and the control on the simulated load 30 shifts to the switching control of the first to third power control modes (power increase/decrease control). In this case, as illustrated in FIG. 5, the emitted power consumed by the simulated load 30 is power acquired by subtraction of the load power from the generated power of the engine generator 20 (emitted power = generated power - load power). From the above, control processing at the time of the power failure according to the one embodiment ends.

### (First modification example)

Next, the first modification example of the above-described one embodiment will be described. In the first modification example, a case where a setting switching unit 17 acquires a power failure signal predicting a power failure (power failure prediction signal in the first modification example) from a power failure prediction unit 64a in Step ST3 in the above control method will be described. In this case, the setting switching unit 17 proceeds to Step ST4 at a time point of acquiring the power failure prediction signal from the power failure prediction unit 64a.

In Step ST4 in the first modification example, control for emitted power consumed by a simulated load 30 is shifted from constant control by a simulated load setting unit 16 to the continuous control by the determination control unit 11. Then, the setting switching unit 17 determines whether the power failure signal is acquired from at least one of an underfrequency relay unit 64b or an undervoltage relay unit 64c. In a case where the setting switching unit 17 determines that the power failure signal is acquired from at least one of the underfrequency relay unit 64b or the undervoltage relay unit 64c, the power failure actually is generated. Thus, proceeding to Step ST5 and ST6 is sequentially performed. In this case, load power of a power load 50 becomes equal to or less than power generated by the engine generator 20, and power increase/decrease control is executed.

On the other hand, in a case where the setting switching unit 17 determines that the power failure signal is not acquired from at least one of the underfrequency relay unit 64b or the undervoltage relay unit 64c, the power failure is not actually generated. Thus, proceeding to Step ST2 is performed, and a second power control mode is continued and power consumption X of a simulated load 30 is kept. From the above, control processing at the time of the power failure according to the first modification example ends.

### (Second modification example)

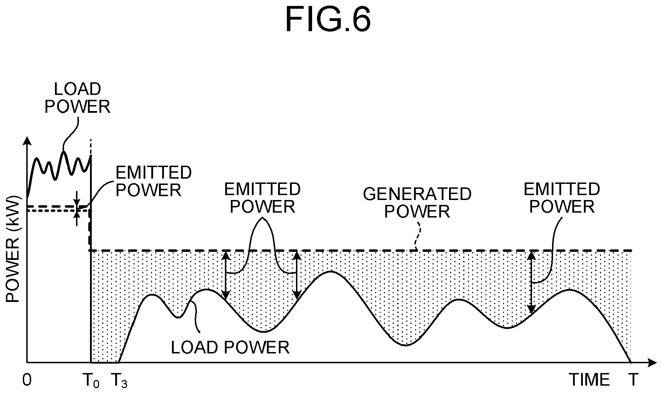

Next, the second modification example of the above-described one embodiment will be described. FIG. 6 is a graph illustrating an example of control by a control device 10 according to the second modification example of the present embodiment. In the first modification example, power supply is selectively started substantially at the same time as the power failure in such a manner that the power supply from the engine generator 20 to the power load 50 is not cut off. On the other hand, in the second modification example, a cutoff unit 65 is opened and a cutoff unit 66 is opened after a power failure is generated, as illustrated in FIG. 6. As a result, power supply from an engine generator 20 to a power load 50 is cut off.

At a time point T₀, similarly to the control according to the one embodiment described above, the engine generator 20 shifts the operation with the substantially constant output during normal operation to the operation with the substantially constant output during the power failure. Then, at a time point T₃, power supply to the power load 50 is started by closing of the cutoff unit 66. In this case, among power loads 50, power loads 50 to be operated are sequentially selected and supplied to acquire a desired load. As a result, the power load 50 to be started after the power failure can be selected as desired by an administrator who administers a facility in which the power loads 50 are provided.

According to the second modification example, unlike the above-described one embodiment, a non-supply time of power does not become substantially 0. However, as compared with the conventional technology, the non-supply time of power ((T₂ - T₁) + (T₁ - T₀) = T₂ - T₀ in FIG. 4) can be significantly shortened, and a degree of freedom in selection of the power load 50 to which power is supplied at the time of the power failure for the facility administrator and a degree of freedom in operation of a power generation system 1 can be improved.

According to the one embodiment of the present invention described above, while the setting switching unit 17 is in the set state during the normal operation of the power generation system 1, the power consumption X set by the simulated load setting unit 16 is kept as the power consumption X of the simulated load 30, and in a case where the power failure is generated or generation of the power failure is predicted, the control is shifted to the control according to the first to third power control modes by switching to the power increase/decrease control by the determination control unit 11. Thus, since it is possible to supply power by switching to the power load 50 set in advance at the time of the power failure without stopping the engine generator 20 even when the power failure is generated, it is possible to continue the power supply to the power load 50 without stopping the power supply even when the commercial power system 40 is in the power failure state. Thus, according to the above-described one embodiment, it is possible to more efficiently execute a business continuity plan (BCP) in the facility including the power load 50. In addition, according to the power increase/decrease control according to the one embodiment described above, in the power increase/decrease control after the power failure, an excessive decrease in the emitted power can be controlled by the control by the second power control mode unit 112 that temporarily keeps the emitted power of the simulated load 30 constant, whereby a fluctuation in the generated power of the engine generator 20 can be controlled, and the engine generator 20 can be stably operated.

### (Recording medium)

In the above-described one embodiment, the program for executing the processing method executed by the control device 10 can be recorded on a recording medium readable by a device such as a computer or another machine (hereinafter, referred to as a computer or the like). When the computer or the like is caused to read and execute the program on the recording medium, the computer or the like functions as the control device 10. Here, the recording medium readable by the computer or the like means a non-transitory recording medium that can store information such as data and programs by an electrical, magnetic, optical, mechanical, or chemical action and that can be read by the computer or the like. Examples of such a recording medium that can be removed from the computer or the like include a flexible disk, a magneto-optical disk, a CD-ROM, a CD-R/W, a DVD, a BD, a DAT, a magnetic tape, and a memory card such as a flash memory. In addition, there are a hard disk, a ROM, and the like as recording media fixed to the computer or the like. Furthermore, an SSD can be used as a recording medium that can be removed from the computer or the like, or as a recording medium fixed to the computer or the like.

In addition, the program to be executed by the control device 10 according to the one embodiment may be stored on a computer connected to a network such as the Internet and provided by being downloaded via the network.

### (Other embodiments)

In the above-described one embodiment, the above-described "unit" can be replaced with a "circuit" or the like. For example, the control unit can be replaced with a control circuit.

Note that in the description of the flowcharts in the present specification, the context of processing between steps is clearly indicated with expressions such as "first", "next", "then", and "subsequently". However, order of processing required to carry out the present embodiment is not uniquely determined by these expressions. That is, the order of processing in the flowcharts described in the present specification can be changed within a range without contradiction.

Although one embodiment of the present invention has been specifically described above, the present invention is not limited to the above-described one embodiment, and various modifications based on a technical idea of the present invention are possible. For example, numerical values mentioned in the above-described one embodiment are merely examples, and different numerical values may be used as necessary. The present invention is not limited by the description and drawings included in a part of the disclosure of the present invention according to the present embodiment. Further effects and modification examples can be easily derived by those skilled in the art. Broader aspects of the present disclosure are not limited to the specific details and representative embodiments presented and described above. Thus, various changes can be made without departing from the spirit or scope of the general inventive concept as defined by the appended claims and equivalents thereof.

### Industrial Applicability

The power generation system, the control device, the control method, and the program according to the present invention are suitably applied to an engine generator including a governor.

### Reference Signs List

- 1: POWER GENERATION SYSTEM
- 10: CONTROL DEVICE
- 11: DETERMINATION CONTROL UNIT
- 12: ADDITION UNIT
- 13: DIFFERENCE CALCULATION UNIT
- 14: CONTROL SENSITIVITY CALCULATION UNIT
- 15: CONTROL OUTPUT CALCULATION UNIT
- 16: SIMULATED LOAD SETTING UNIT
- 17: SETTING SWITCHING UNIT
- 18: CONTROL AMOUNT SELECTION UNIT
- 19: STORAGE UNIT
- 20: ENGINE GENERATOR
- 21: INTERNAL COMBUSTION ENGINE
- 22: GENERATOR
- 23: SELF-AUXILIARY MACHINE
- 30: SIMULATED LOAD
- 31: SIMULATED LOAD POWER CONSUMPTION REGULATOR
- 40: COMMERCIAL POWER SYSTEM
- 50: POWER LOAD
- 61: GENERATED POWER MEASUREMENT UNIT
- 62: POWER LOAD POWER CONSUMPTION MEASUREMENT UNIT
- 63: SIMULATED LOAD POWER CONSUMPTION MEASUREMENT UNIT
- 64: POWER FAILURE DETECTION UNIT
- 64a: POWER FAILURE PREDICTION UNIT
- 64b: UNDERFREQUENCY RELAY UNIT
- 64c: UNDERVOLTAGE RELAY UNIT
- 65, 66: CUTOFF UNIT
- 111: FIRST POWER CONTROL MODE UNIT
- 112: SECOND POWER CONTROL MODE UNIT
- 113: THIRD POWER CONTROL MODE UNIT

## Claims

1. A power generation system comprising:
a generator that controls generated power by driving an internal combustion engine including a governor;
a power load to which external power from an external commercial power system and the generated power of the generator can be supplied;
a simulated load that consumes the generated power of the generator together with the power load; and
a control unit capable of controlling power consumption of the simulated load, wherein
the control unit
performs, as power increase/decrease control capable of changing the power consumption of the simulated load to an arbitrary power value in a state in which power generation driving of the generator is continuously performed, control of setting the power consumption of the simulated load to predetermined power consumption before acquiring a power failure signal indicating detection or prediction of a power failure of the commercial power system, and control of changing the power consumption of the simulated load from the predetermined power consumption to other power consumption in a case where the power failure signal is acquired.

2. The power generation system according to claim 1, wherein
the control unit switches the power load to at least one of an important general load or a disaster prevention load set in advance in a case where the power failure signal is acquired.

3. The power generation system according to claim 1 or 2, wherein
the control unit controls the power consumption of the simulated load in such a manner as to cause the simulated load to consume power corresponding to a difference between the power consumption of the power load and the generated power of the generator in a case where the power failure signal is acquired.

4. The power generation system according to any one of claims 1 to 3, wherein
the predetermined power consumption of the simulated load is equal to or higher than 0 kW and lower than a rated output of the generator.

5. A control device comprising:
a control unit capable of controlling, in a case of supplying generated power of a generator controlled by driving of an internal combustion engine including a governor to a power load to which external power from an external commercial power system and the generated power of the generator can be supplied, power consumption of a simulated load which is different from the power load, power consumption of which can be changed, and which consumes the generated power of the generator together with the power load, wherein
the control unit
performs, as power increase/decrease control capable of changing the power consumption of the simulated load to an arbitrary power value in a state in which power generation driving of the generator is continuously performed, control of setting the power consumption of the simulated load to predetermined power consumption before acquiring a power failure signal indicating detection or prediction of a power failure of the commercial power system, and control of changing the power consumption of the simulated load from the predetermined power consumption to other power consumption in a case where the power failure signal is acquired.

6. A control method executed by a control unit capable of controlling, in a case of supplying generated power of a generator controlled by driving of an internal combustion engine including a governor to a power load to which external power from an external commercial power system and the generated power of the generator can be supplied, power consumption of a simulated load which is different from the power load, power consumption of which can be changed, and which consumes the generated power of the generator together with the power load, the control method comprising:
performing, as power increase/decrease control capable of changing the power consumption of the simulated load to an arbitrary power value in a state in which power generation driving of the generator is continuously performed, control of setting the power consumption of the simulated load to predetermined power consumption before acquiring a power failure signal indicating detection or prediction of a power failure of the commercial power system, and control of changing the power consumption of the simulated load from the predetermined power consumption to other power consumption in a case where the power failure signal is acquired.

7. A program causing
a control unit capable of controlling, in a case of supplying generated power of a generator controlled by driving of an internal combustion engine including a governor to a power load to which external power from an external commercial power system and the generated power of the generator can be supplied, power consumption of a simulated load which is different from the power load, power consumption of which can be changed, and which consumes the generated power of the generator together with the power load,
to execute, as power increase/decrease control capable of changing the power consumption of the simulated load to an arbitrary power value in a state in which power generation driving of the generator is continuously performed, control of setting the power consumption of the simulated load to predetermined power consumption before acquiring a power failure signal indicating detection or prediction of a power failure of the commercial power system, and control of changing the power consumption of the simulated load from the predetermined power consumption to other power consumption in a case where the power failure signal is acquired.
